# EUROPÄISCHE PATENTSCHRIFT

(11) **EP 4 277 248 B1**
(45) Veröffentlichungstag und Bekanntmachung des Hinweises auf die Patenterteilung: **29.04.2026**
(21) Anmeldenummer: 23172389.1
(22) Anmeldetag: 09.05.2023
(51) Int. Cl.: H04M 1/02, H04M 11/02

(54) **MODULTRÄGER ZUR AUFNAHME EINES MODULS FÜR TÜRANLAGEN, MODULEINHEIT UND TÜRANLAGE**
MODULE SUPPORT FOR RECEIVING A MODULE FOR DOOR ASSEMBLIES, MODULE UNIT AND DOOR ASSEMBLY
SUPPORT DE MODULE DESTINÉ À RECEVOIR UN MODULE POUR INSTALLATIONS DE PORTE, UNITÉ DE MODULE ET INSTALLATION DE PORTE

(30) Priorität: 10.05.2022 DE 102022111678
(43) Veröffentlichungstag der Anmeldung: 15.11.2023
(73) Patentinhaber: Schneider Electric GmbH, 40880 Ratingen (DE)
(72) Erfinder: STEUWER, Dirk, 51469 Bergisch Gladbach (DE); RITTINGHAUS, Olaf, 58540 Meinerzhagen (DE)
(74) Vertreter: Herrmann, Jochen

(56) Entgegenhaltungen:
- EP-A1- 2 933 890
- EP-A2- 0 980 200
- DE-A1- 10 353 239
- DE-C2- 19 605 163
- JP-A- 2004 208 465

## Beschreibung

Die Erfindung betrifft einen Modulträger zur Aufnahme eines Moduls für Türanlagen, insbesondere für Türsprechanlagen, wobei der Modulträger zur Anordnung, insbesondere zur rastermäßigen Anordnung in oder an einem Aufnahmegehäuse ausgebildet ist, wobei der Modulträger einen Rahmen aufweist, der Rahmenteile in Form von Längs- und Querstreben aufweist und einen Aufnahmeraum zur Aufnahme des Moduls zumindest teilweise umgibt. Die Erfindung betrifft auch eine Moduleinheit mit einem Modulträger und einem Modul. Ferner betrifft die Erfindung eine Türanlage, insbesondere Türsprechanlage, mit einem Aufnahmegehäuse zur Aufnahme einer Anordnung, insbesondere gerasterten Anordnung, einer Mehrzahl von Moduleinheiten.

Aus DE 196 05 163 C2 ist ein Modulträger in Form eines Modulaufnahmegehäuses für Türanlagen bekannt, in das ein Moduleinsatz einsetzbar ist. Das Modulaufnahmegehäuse wird in ein Unterputz- oder Aufputzgehäuse eingerastet, wobei mehrere Modulaufnahmegehäuse mit eingesetzten Moduleinsätzen im Raster aneinanderreihbar sind. Die Moduleinsätze weisen jeweils ein Modulgehäuse auf. Das Modulaufnahmegehäuse weist Seitenwände auf, an denen Rastelemente vorgesehen sind, um eine Rastverbindung mit dem Modulgehäuse zu ermöglichen. In die Modulaufnahmegehäuse werden Anschlussleisten eingesetzt. Die Anschlussleisten weisen Steckverbinder auf, die mit den Moduleinsätzen verbindbar sind. Abgehende und ankommende Leitungen können somit verbunden werden, ohne dass die Moduleinsätze eingesetzt sein müssen.

Nachteilig bei den bekannten Modulträgern ist, dass zur Bereitstellung von elektrischen Verbindungsmöglichkeiten Anschlussleisten, beispielsweise in Form von Leiterplatten, erforderlich sind. Dies führt zunächst zu einem erhöhten Teileaufwand und somit erhöhten Herstellungskosten. Wenn die Modulträger als Baugruppe mit den Anschlussleisten zusammen hergestellt werden sollen, ergeben sich ferner weitere Montageschritte zur Anbringung der Anschlussleisten. Wenn die Anschlussleisten hingegen erst bei der Montage der Türanlage eingesetzt werden, wird die Montage der Türanlage erschwert.

Darüber hinaus ergibt sich eine hohe Anzahl von Kontaktstellen. So müssen Anschlussleitungen einerseits an der Anschlussleiste und andererseits an dem Modul angebracht werden. Ferner können auf einer Leiterplatte weitere Kontaktstellen, wie beispielsweise Lötstellen, vorliegen. Eine hohe Anzahl von Kontaktstellen erhöht den elektrischen Widerstand und vermindert somit die Effizienz.

Ferner ist bei bekannten Türanlagen nachteilig, dass verschiedene Module, wie beispielsweise Türsprechmodule, Tastenmodule oder Kameramodule jeweils eigens gestaltete Anschlussleisten benötigen. Dementsprechend ergibt sich ein erhöhter Teile- und Montagaufwand. So müssen beispielsweise Modulträger mit verschiedenen Anschlussleisten produziert werden, und/oder es muss bei der Montage der Türstation darauf geachtet werden, dass eine passende Anschlussleiste in den Modulträger eingesetzt wird.

Es ist Aufgabe der Erfindung, einen Modulträger bereitzustellen, der einen reduzierten Teileaufwand, eine erhöhte Effizienz und eine erleichterte Montage ermöglicht. Es ist weiter Aufgabe der Erfindung, eine Moduleinheit mit einem derartigen Modulträger und einem Modul bereitzustellen. Eine weitere Aufgabe der Erfindung ist es, eine Türanlage mit einer Mehrzahl derartiger Moduleinheiten bereitzustellen.

Die den Modulträger betreffende Aufgabe wird dadurch gelöst, dass wenigstens eines der Rahmenteile des Modulträgers mindestens ein Verbindungselement mit mindestens zwei Kontaktbereichen zur mittelbaren oder unmittelbaren elektrischen Verbindung mit mindestens einem weiteren Modulträger und/oder mindestens einem Modul aufweist.

Das Verbindungselement ist somit am Modulträger vorgesehen. Daher ist es nicht notwendig, eine Anschlussleiste, insbesondere eine Leiterplatte vorzusehen, um Kontaktbereiche zur elektrischen Verbindung bereitzustellen. Dies kann den Teile- und Montageaufwand erheblich reduzieren.

Ein Kontaktbereich kann beispielsweise ein Stecker oder eine Buchse sein. Das Verbindungselement kann folglich zumindest zwei Stecker, zumindest einen Stecker und eine Buchse, oder zumindest zwei Buchsen aufweisen, die jeweils zumindest teilweise miteinander in elektrischem Kontakt stehen. Bevorzugt können die Kontaktbereiche in Form von Steckern und/oder Buchsen mehradrig sein, wobei die Kontaktbereiche insbesondere adernindividuell miteinander in elektrischem Kontakt stehen. Hierbei kann insbesondere ein erster Kontaktbereich eines Verbindungselements mit einem zweiten Kontaktbereich des Verbindungselements in Reihe geschaltet sein. Weiter kann ein dritter Kontaktbereich mit dem ersten und dem zweiten Kontaktbereich parallel geschaltet sein.

Ferner kann beispielsweise eine Verbindungsleitung an einen Kontaktbereich des Verbindungselements angeschlossen werden und ein Modul, beispielsweise mit einem Modul-Kontaktbereich, an dem zweiten Kontaktbereich. Somit befinden sich zwischen der Verbindungsleitung und dem Modul lediglich zwei Kontaktstellen, wodurch sich der Kontaktwiderstand reduzieren lässt. Bei der Verbindungsleitung kann es sich beispielsweise um eine Bus-Leitung handeln, die eine Verbindung mit einem weiteren Modulträger und/oder einem weiteren Modul ermöglicht. Es ist auch denkbar, dass eine Verbindungsleitung an einen Kontaktbereich des Verbindungselements und eine weitere Verbindungsleitung an den zweiten Kontaktbereich des Verbindungselements angeschlossen ist. Auf diese Weise lassen sich auch weiter entfernte Modulträger und/oder Module miteinander verbinden, ohne dass unterschiedliche Längen an Verbindungsleitungen erforderlich werden, indem das Verbindungselement als Koppelstelle verwendet wird.

Die Montage und die Verdrahtung mehrerer Moduleinheiten in oder an einem Aufnahmegehäuse können ebenfalls einfach durchgeführt werden. Als Moduleinheit kann ein Modulträger mit einem Modul bezeichnet werden. So können mehrere Modulträger in oder an dem Aufnahmegehäuse angebracht werden, beispielsweise durch Verrastung. Es ist nunmehr nicht erforderlich, zunächst Anschlussleisten oder Leiterplatten zu montieren. Die Kontaktbereiche der Verbindungselemente können genutzt werden, um die Modulträger miteinander in geeigneter Weise mittels Verbindungsleitungen, beispielsweise Bus-Leitungen miteinander elektrisch zu verbinden. Anschließend können die Module eingesetzt werden, wobei diese an weitere Kontaktbereiche der Verbindungselemente angeschlossen werden können. Mechanisch können die Module beispielsweise mittels geeigneter Rastverbindungen mit den Modulträgern verbindbar sein.

Gemäß einer bevorzugten Erfindungsvariante kann vorgesehen sein, dass das mindestens eine Verbindungselement an dem Modulträger unmittelbar gehalten ist. Somit ergibt sich ein kompakter und stabiler Aufbau des Modulträgers. Ferner kann sich eine definierte geometrische Anordnung der Verbindungselemente an dem Modulträger ergeben, sodass eine Verbindung mit einem Modul und/oder einem weiteren Modulträger erleichtert wird.

Erfindungsgemäß kann es auch vorgesehen sein, dass das wenigstens eine Rahmenteil einen Rahmenteil-Querschnitt aufweist, und dass die Koppelstelle zwischen dem Verbindungselement und dem Rahmenteil zumindest bereichsweise, vorzugsweise vollständig innerhalb des Rahmenteil-Querschnitts angeordnet ist.

Auf diese Weise ist das Verbindungselement sicher an dem Rahmenteil gehalten. Auch ist das Verbindungselement, insbesondere im Bereich der Koppelstelle, vor unbeabsichtigter Kontaktierung geschützt untergebracht. Der Rahmenteil-Querschnitt kann verschiedenartig geformt sein, beispielsweise polygonal, insbesondere im Wesentlichen rechteckig oder I- oder L-förmig.

Diese Vorteile kommen in besonderem Maße zum Tragen, wenn vorgesehen ist, dass der Modulträger aus einem Material besteht, und dass in einem Montagezustand das mindestens eine Verbindungselement zumindest teilweise von diesem Material umgeben ist, insbesondere unmittelbar mit diesem in Kontakt steht.

Gemäß einer vorteilhaften Weiterbildung der Erfindung wird vorgeschlagen, dass das mindestens eine Verbindungselement stoffschlüssig mit dem Modulträger verbunden ist. Somit ergibt sich ein einfach zu handhabender Modulträger, mit dem das Verbindungselement insbesondere verliersicher verbunden ist.

Wenn weiter vorgesehen ist, dass das mindestens eine Verbindungselement während des Herstellungsprozesses des Modulträgers mit diesem verbunden wird, ergibt sich eine weitere Vereinfachung der Montage. Hierbei kann insbesondere vorgesehen sein, dass der Herstellungsprozess des Modulträgers zumindest teilweise urformend ist. Auf diese Weise kann der Modulträger mit einem geringen Materialeinsatz und kostengünstig hergestellt werden. Insbesondere kann das mindestens eine Verbindungselement während des Herstellungsprozesses des Modulträgers von einem Grundmaterial des Modulträgers eingegossen werden.

Alternativ oder zusätzlich kann es auch vorgesehen sein, dass das mindestens eine Verbindungselement lösbar mit dem Modulträger verbunden ist, insbesondere mittels einer kraft- und/oder formschlüssigen Verbindung, besonders bevorzugt mittels einer Rastverbindung. Ein gegebenenfalls zu ersetzendes Verbindungselement, beispielsweise ein verschlissenes oder beschädigtes Verbindungselement, kann auf diese Weise mit geringem Aufwand ersetzt werden, ohne dass der Modulträger getauscht werden muss. Insbesondere kann ein Austausch des Verbindungselements auch bei einem in ein Aufnahmegehäuse eingesetztem Modulträger getauscht werden.

Gemäß einer Erfindungsvariante wird vorgeschlagen, dass der Modulträger zumindest eine Verbindungselement-Aufnahme aufweist, und dass in der zumindest einen Verbindungselement-Aufnahme zumindest ein Verbindungselement aufnehmbar ist. Somit wird eine definierte und stabile Aufnahme des Verbindungselements an dem Modulträger erreicht.

Sicher gehalten und vor unbeabsichtigter Kontaktierung geschützt ist das zumindest eine Verbindungselement insbesondere, wenn es in der zumindest einen Verbindungselement-Aufnahme von zumindest einer Aufnahme-Abdeckung gehalten ist. Eine einfach herstellbare und handhabbare Festlegung der Aufnahme-Abdeckung lässt sich vorzugsweise mittels einer Rastverbindung zwischen der Aufnahme-Abdeckung und dem Modulträger erreichen.

Wenn vorgesehen ist, dass zumindest ein Kontaktbereich des zumindest einen Verbindungselements in einem Montagezustand in Richtung zu dem Modul orientiert ist, kann das Modul einfach mit dem Verbindungselement verbunden werden. Insbesondere kann das Modul bei der Montage einfach auf den Montagehalter hinzubewegt werden, wobei ein Kontakt zwischen dem Modul und dem Kontaktbereich des Verbindungselements hergestellt werden kann. In der gleichen Bewegungsrichtung kann beispielsweise auch eine Befestigung, insbesondere Verrastung des Moduls an dem Modulträger erzielbar sein.

Wenn weiter vorgesehen ist, dass zumindest ein weiterer Kontaktbereich des zumindest einen Verbindungselements in einer Richtung von dem Rahmen zu dem Aufnahmeraum hin orientiert ist, kann an diesen Kontaktbereich auf einfache Weise eine Verbindungsleitung angeschlossen werden. Auch ergibt sich hierbei eine flache Bauweise, wie dies bei Türanlagen allgemein und bei Aufputzanlagen in besonderem Maße erwünscht ist. Ferner kann zusätzlich oder alternativ vorgesehen sein, dass der zumindest eine weitere Kontaktbereich in einer Richtung ausgehend von dem Rahmen von dem Aufnahmeraum hinweg orientiert ist. Hierbei kann der weitere Kontaktbereich in eine Richtung hinweg von dem Modul und/oder in eine Richtung parallel zu einer Modulträger-Unterseite ausgerichtet sein. Die Modulträger-Unterseite kann im Wesentlichen parallel zu einer Bedienseite des Moduls sein, die Bedienelemente, beispielsweise Klingeltasten, des Moduls aufweisen kann.

Gemäß einer bevorzugten Erfindungsvariante kann vorgesehen sein, dass das zumindest eine Verbindungselement aus einer Mehrzahl von Pinelementen besteht, wobei die Pinelemente jeweils Kontaktpins aufweisen, und wobei die Kontaktbereiche des Verbindungselements in Form von Steckern aus den Kontaktpins der Pinelemente gebildet sind. Es ergibt sich somit ein kompakter Aufbau des Verbindungselements. Die Pinelemente können beispielsweise aus Drahtabschnitten gebildet sein. Die Pinelemente sind bevorzugt voneinander elektrisch isoliert, beispielsweise voneinander beabstandet oder mittels eines elektrisch isolierenden Materials.

Die Pinelemente können mittels eines Halteelements aneinandergehalten sein, um das Verbindungselement auszubilden. Die Pinelemente können jedoch jeweils auch einzeln und/oder voneinander getrennt vorliegen, und beispielsweise über die Aufnahme an oder in dem Modulträger miteinander gehalten sein, um das Verbindungselement zu bilden.

Wenn vorgesehen ist, dass die Pinelemente jeweils mindestens zwei Kontaktpins aufweisen, die im Winkel zueinander stehen, vorzugsweise im Wesentlichen senkrecht zueinander stehen, können auf einfache Weise Kontaktbereiche bereitgestellt werden, die im Winkel zueinander ausgerichtet sind. Beispielsweise kann ein Kontaktbereich in einer Montageposition zu einem Modul hin orientiert sein, und ein weiterer Kontaktbereich im Winkel hierzu, beispielsweise in Richtung zu dem Aufnahmeraum des Rahmens des Modulträgers hin oder von diesem hinweg orientiert.

Besonders vielseitige Verbindungsmöglichkeiten ergeben sich, wenn vorgesehen ist, dass das zumindest eine Verbindungselement drei Kontaktbereiche aufweist, wobei ein erster Kontaktbereich durch eine Mehrzahl von ersten Kontaktpins gebildet ist, wobei ein zweiter Kontaktbereich durch eine Mehrzahl von zweiten Kontaktpins gebildet ist, wobei die ersten zu den zweiten Kontaktpins im Winkel stehen, wobei ein dritter Kontaktbereich durch eine Mehrzahl von dritten Kontaktpins gebildet ist, wobei die dritten Kontaktpins zu den ersten oder den zweiten Kontaktpins beabstandet und im Wesentlichen parallel ausgerichtet sind, und wobei die dritten Kontaktpins vorzugsweise mit den ersten und/oder den zweiten Kontaktpins mittels Pin-Leitungselementen verbunden sind. Die Pin-Leitungselemente können vorzugsweise zumindest teilweise in dem Modulträger aufgenommen sein.

Wird ein urformendes Verfahren zur Herstellung des Modulträgers verwendet, beispielsweise der Modulträger im Kunststoff-Spritzgussverfahren hergestellt, so können die Pin-Leitungselemente vollständig oder teilweise in dem Material des Modulträgers eingebettet, insbesondere im Kunststoffmaterial eingespritzt sein.

Beispielsweise ist denkbar, dass in einer ersten Richtung, insbesondere in Richtung eines in einem Montagezustand an oder in dem Modulträger aufgenommenen Moduls, nur ein Kontaktbereich erforderlich und/oder erwünscht ist. In einer Richtung im Winkel zu dieser ersten Richtung, beispielsweise zu dem Aufnahmeraum des Rahmens des Modulträgers hin, kann jedoch mehr als ein Kontaktbereich erforderlich und/oder erwünscht sein. Beispielsweise kann nun eine Verbindungsleitung an einen der in der zweiten Richtung orientierten Kontaktbereiche angeschlossen werden. An den in der ersten Richtung orientierten Kontaktbereich kann das Modul angeschlossen sein. An den weiteren in der zweiten Richtung orientierten Anschlussbereich kann eine weitere Verbindungsleitung, beispielsweise zur Anbindung eines weiteren Modulträgers und/oder Moduls angeschlossen werden.

Hierbei kann insbesondere vorgesehen sein, dass die dritten Kontaktpins mit den ersten oder den zweiten Kontaktpins im Wesentlichen kollinear ausgerichtet sind.

Eine Variante der Erfindung kann dadurch gekennzeichnet sein, dass an dem Modulträger ein Haupt-Anschlussterminal angebracht ist, wobei das Haupt-Anschlussterminal dazu ausgebildet ist, eine elektrische Verbindung zwischen einer Anschluss-Leitung und einem Modul herzustellen, wobei die Anbringung des Haupt-Anschlussterminal an dem Modulträger vorzugsweise mittels einer kraft- und/oder formschlüssigen Verbindung, insbesondere einer Rastverbindung, einer Schraubverbindung, einer Klemmverbindung erzielbar ist. Alternativ kann auch eine stoffschlüssige, vorzugsweise eine Klebverbindung vorgesehen sein.

Die Anschluss-Leitung kann beispielsweise einen Kontakt zu einer Stromversorgung, insbesondere einem Netzgerät, und/oder zu einer oder mehreren Hausstellen, wie beispielsweise Sprechstellen oder Wohntelefonen, insbesondere mittels einer Bus-Verbindung herstellen. Es kann vorgesehen sein, dass nicht jedes Modul mit der Anschluss-Leitung verbindbar ist oder verbunden werden muss. Daher muss nicht an jedem Modulträger ein Hauptanschluss-Terminal erwünscht und/oder vorgesehen sein. Nach Bedarf kann das Hauptanschluss-Terminal somit an dem Modulträger angebracht werden, und insbesondere im Falle einer lösbaren Verbindung, bei Bedarf wieder von dem Modulträger entfernt werden. Insbesondere ist es auch denkbar, dass die Modulträger einer Türsprechanlagen als Gleichteile oder im Wesentlichen als Gleichteile ausgebildet sind, wobei einer der Modulträger mittels eines Hauptanschluss-Terminals individualisiert ist. Hierdurch lässt sich der Teileaufwand erheblich reduzieren.

Die die Moduleinheit betreffende Aufgabe wird dadurch gelöst, dass das Modul mindestens ein zu einem Kontaktbereich des mindestens einen Verbindungselements korrespondierend ausgebildetes Modul-Verbindungselement aufweist, vorzugsweise an einer Modul-Platine des Moduls, und wobei mittels des zumindest einen Modul-Verbindungselements und des zumindest einen Kontaktbereichs eine elektrische Verbindung zwischen dem Modulträger und dem Modul herstellbar ist. Die Moduleinheit ist somit einfach zu montieren. Insbesondere kann vorgesehen sein, dass verschiedenartige Module, wie beispielsweise Türsprech-, Kamera- und/oder Tastenmodule gleichartig angeordnete und/oder ausgebildete Modul-Verbindungselemente aufweisen, und dass der Modulträger zu diesen gleichartig ausgebildeten Verbindungselementen korrespondierende Verbindungselemente aufweist. Somit können trotz verschiedenartiger Module gleiche Modulträger verwendet werden, was Montage, Lagerhaltung und Fertigung vereinfacht und kostengünstiger durchführbar macht.

Gemäß einer Erfindungsvariante kann ferner vorgesehen sein, dass das Modul ein Modul-Hauptanschlusselement, vorzugsweise an der Modul-Platine des Moduls, aufweist, und dass das Modul-Hauptanschlusselement korrespondierend zu einem Hauptanschluss-Element des Hauptanschluss-Terminals ausgebildet ist. Auf diese Weise wird der Anschluss einer Anschluss-Leitung erleichtert.

Die die Türanlage betreffende Aufgabe wird dadurch gelöst, dass eine Moduleinheit als Hauptmoduleinheit mittels eines Hauptanschluss-Terminals mit einer Anschluss-Leitung verbindbar ist, dass zwischen einem Kontaktbereich der Hauptmoduleinheit und einem Kontaktbereich mindestens einer weiteren Moduleinheit mittels einer Verbindungsleitung eine elektrische Verbindung herstellbar ist, und dass vorzugsweise zwischen einem Kontaktbereich der Hauptmoduleinheit und/oder einem Kontaktbereich der mindestens einen weiteren Moduleinheit mittels weiterer Verbindungsleitungen eine elektrische Verbindung zu mindestens einer weiteren Moduleinheit herstellbar ist. Somit wird eine einfach zu montierende und zu verdrahtende Türanlage bereitgestellt.

Die Erfindung wird im Folgenden anhand von in den Figuren dargestellten Ausführungsbeispielen näher erläutert. Es zeigen:
- Figur 1: eine schematische Darstellung einer Moduleinheit mit einem Modulträger und einem Modul,
- Figur 2: eine schematische Darstellung eines Modulträgers mit teilweise angeschlossenen Verbindungsleitungen und angeschlossener Anschluss-Leitung,
- Figur 3: eine schematische Darstellung eines Modulträgers,
- Figur 4: eine schematische Darstellung eines Modulträgers mit Verbindungselement-Aufnahmen, Verbindungselementen und einer Aufnahme-Abdeckung,
- Figur 5: schematische Darstellungen einer Ausführungsform eines Verbindungselements,
- Figur 6: schematische Darstellungen einer weiteren Ausführungsform eines Verbindungselements,
- Figur 7: eine perspektivische schematische Darstellung sowie schematische Schnittansichten von Verbindungsleitungen,
- Figur 8: eine schematische Aufsicht auf ein Aufnahmegehäuse mit darin angeordneten Modulträgern und Verbindungsleitungen sowie einer Anschluss-Leitung,
- Figur 9: eine weitere schematische Aufsicht auf ein Aufnahmegehäuse mit darin angeordneten Modulträgern und Verbindungsleitungen sowie einer Anschluss-Leitung,
- Figur 10: eine schematische Schnittansicht eines Aufnahmegehäuses mit darin aufgenommenen Moduleinheiten,
- Figur 11: eine schematische Perspektivdarstellung einer Ausführungsform eines Modulträgers, und
- Figur 12: eine schematische Aufsicht auf eine Ausführungsform eines Modulträgers zur Aufnahme von zwei Modulen.

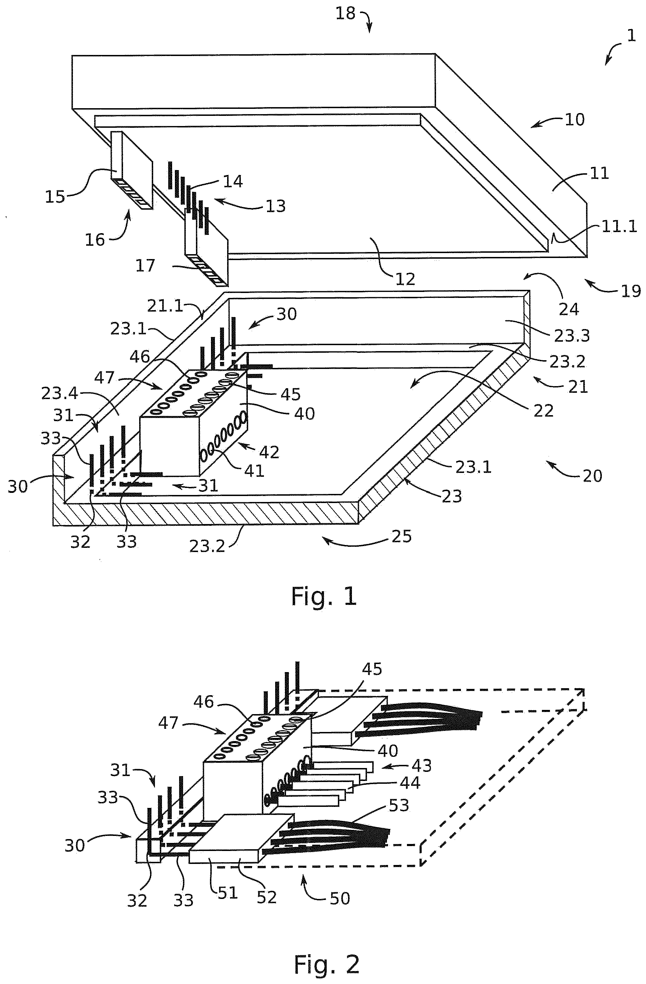

Figur 1 zeigt eine schematische Darstellung einer Moduleinheit 1 mit einem Modul 10 und einem Modulträger 20. Das Modul 10 kann beispielsweise ein Türsprech-, ein Tasten- oder ein Kameramodul sein. Das Modul 10 kann einen Modulkörper 11 aufweisen. Das Modul 10 kann eine Bedienseite 18 aufweisen, auf der Bedienelemente, wie beispielsweise Tasten, oder aber ein Lautsprecher oder eine Kamera angeordnet sein können. Gegenüberliegend der Bedienseite 18 kann das Modul 10 eine Modul-Unterseite 19 aufweisen. Die Modul-Unterseite 19 kann in einem Montagezustand zu dem Modulträger 20 und/oder zu einem Aufnahmegehäuse 60 und/oder zu einer Wand beispielsweise eines Gebäudes ausgerichtet sein.

Im Bereich der Modul-Unterseite 19 kann der Modulkörper 11 eine Modulkörper-Anlagefläche 11.1 aufweisen. Mit der Modulkörper-Anlagefläche 11.1 kann das Modul in einem Montagezustand an einer Rahmen-Anlagefläche 21.1 des Modulträgers 20 aufliegen. Es ist jedoch nicht zwingend erforderlich, dass eine Modulkörper-Anlagefläche 11.1 und/oder eine Rahmen-Anlagefläche 21.1 vorgesehen sind. In jedem Fall kann das Modul 10 in einem Montagezustand an dem Modulträger 20 gehalten sein, beispielsweise durch eine Rastverbindung. Denkbar sind selbstverständlich auch andersartige Verbindungen.

Ferner kann das Modul 10, vorzugsweise im Bereich der Modul-Unterseite 19, eine Modul-Platine 12 aufweisen, insbesondere eine Leiterplatte. Die Modul-Platine 12 kann Modul-Verbindungselemente 15 aufweisen, die zur elektrischen Verbindung mit Kontaktbereichen 31 eines Verbindungselements 30 des Modulträgers 20 vorgesehen sein können. Vorliegend sind die Modul-Verbindungselemente 15 als Buchsen ausgestaltet. Es ist jedoch auch denkbar, dass die Modul-Verbindungselemente 15 als Stecker ausgestaltet sind. Selbstverständlich müssen die Modul-Verbindungselemente 15 nicht zwangsläufig an der Modul-Platine 12 vorgesehen sein, sondern können beispielsweise auch an dem Modulkörper 11 vorgesehen sein. Die Modul-Verbindungselemente 15 können Modul-Kontaktbereiche 16 aufweisen, die als Modul-Kontaktaufnahmen 17 ausgestaltet sein können. In den Modul-Kontaktaufnahmen 17 können Kontaktbereiche 31 der Verbindungselemente 30 des Modulträgers 20 aufnehmbar sein.

An dem Modul 10 kann ferner, vorzugsweise im Bereich der Modul-Platine 12 ein Modul-Hauptanschlusselement 13 vorgesehen sein. Vorliegend ist das Modul-Hauptanschlusselement 13 aus Modul-Kontaktpins 14 in Form eines Steckers gebildet. Es ist jedoch auch denkbar, dass das Modul-Hauptanschlusselement 13 als Buchse ausgestaltet ist. Mittels des Modul-Hauptanschlusselements 13 kann eine Verbindung mit einem Hauptanschluss-Terminal 40 herstellbar sein, das an dem Modulträger 20 vorgesehen sein kann.

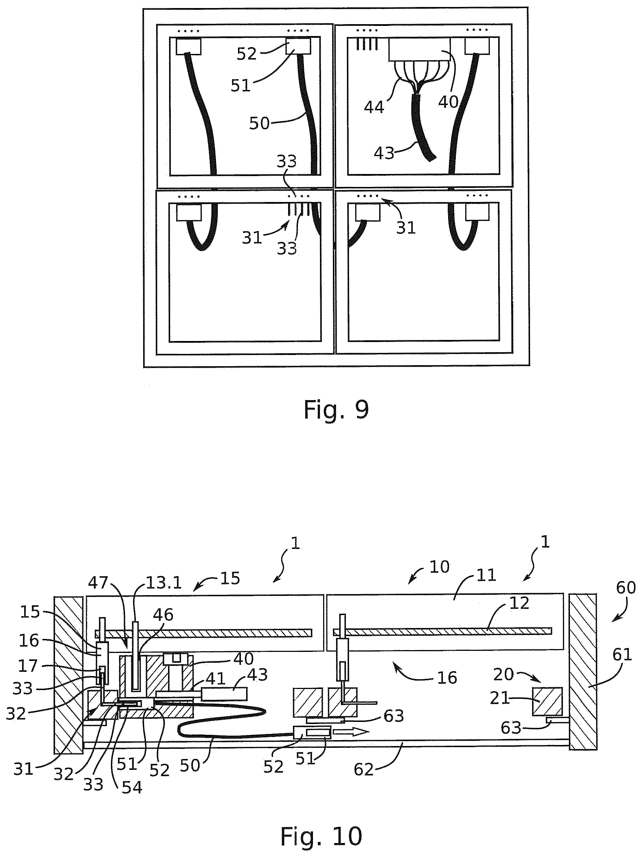

Der Modulträger 20 kann eine Verbindungsseite 24 aufweisen, die in einem Montagezustand zu dem Modul 10 hin ausgerichtet ist. Der Verbindungsseite 24 gegenüberliegend kann der Modulträger 20 eine Modulträger-Unterseite 25 aufweisen. Wenn der Modulträger 20 in einem Aufnahmegehäuse 60 (s. Fig. 10) aufgenommen ist, kann die Modulträger-Unterseite 25 zu einer Rückwand 62 des Aufnahmegehäuse 60 hin ausgerichtet sein. Die Rückwand 62 des Aufnahmegehäuses 60 kann beispielsweise zu einer Hauswand hin ausgerichtet sein.

Wie der Figur 1 weiter zu entnehmen ist, kann der Modulträger 20 einen Rahmen 21 aufweisen. Der Rahmen 21 kann Rahmenteile 23 in Form von Längsstreben 23.1 und Querstreben 23.2 aufweisen. Die Rahmenteile 23 können dabei beliebige Querschnittsformen aufweisen. Auch können die Querschnittsformen von Rahmenteilen 23 eines Modulträgers 20 voneinander abweichen. Insbesondere können Längsstreben 23.1 beispielsweise andere Querschnittsformen aufweisen als Querstreben 23.2. Vorliegend bestehen die Rahmenteile 23 jeweils aus einem im Bereich der Modulträger-Unterseite 25 des Modulträgers 20 angeordneten Teil mit einem im Wesentlichen rechteckigen Querschnitt, an den sich in Richtung zu der Verbindungsseite 24 hin Wandungen anschließen. So kann eine Längsstrebe 23.1 eine Längs-Wandung 23.4 aufweisen, und/oder eine Querstrebe 23.2 eine QuerWandung 23.3.

Der Rahmen 21 des Modulträgers 20 kann einteilig ausgebildet sein und beispielsweise urformend, insbesondere als Spritzgussteil aus Kunststoff, hergestellt sein. Es ist auch denkbar, dass der Rahmen 21 aus Einzelteilen zusammengesetzt ist, beispielsweise aus Rahmenteilen 23, die in Eckbereichen des Rahmen 21 zusammengefügt sind, beispielsweise stoffschlüssig, insbesondere durch eine Klebverbindung. Auch ist es denkbar, dass Eckverbinder die Verbindung zwischen Rahmenteilen 23, beispielsweise kraft- und/oder formschlüssig, insbesondere durch eine Rastverbindung, herstellen.

In Figur 1 sind die in der Zeichenebene vorne und rechts liegenden Rahmenteile 23 zur besseren Übersicht teilweise geschnitten dargestellt, sodass die vordere und die rechts liegende Wandung 23.3 bzw. 23.4 nicht sichtbar sind. Ebenfalls zur besseren Übersicht sind die Quer- und Längs-Wandungen 23.3, 23.4 in den übrigen Figuren nicht dargestellt.

Wie aus der Figur 1 weiter ersichtlich ist, können die Rahmenteile 23 des Rahmens 21 des Modulträgers 20 einen Aufnahmeraum 22 zumindest teilweise umgeben. In einem Montagezustand kann das Modul 10 beispielsweise mit seiner Modul-Platine 12 und/oder Modul-Verbindungselementen 15 und/oder einem Modul-Hauptanschlusselement 13 zumindest teilweise in dem Aufnahmeraum 22 aufgenommen sein. Der Modulträger 20 kann eine Rahmen-Anlagefläche 21.1 aufweisen, auf der das Modul 10 beispielsweise mit einer Modulkörper-Anlagefläche 11.1 zumindest teilweise aufliegen kann. Vorliegend ist die Rahmen-Anlagefläche 21.1 an den Quer- und Längs-Wandungen 23.3, 23.4 der Rahmenteile 23 vorgesehen.

Die Rahmenteile 23 können ferner Verbindungselemente 30 aufweisen. Wie in der Figur 1 zu erkennen ist, können die Verbindungselemente 30 in einer Längsstrebe 23.1 teilweise aufgenommen sein. Die Verbindungselemente 30 können Pinelemente 32 aufweisen, die jeweils Kontaktbereiche 31 aufweisen können. Vorliegend sind die Verbindungselemente 30 aus jeweils vier Pinelementen 32 gebildet, die jeweils zwei Kontaktbereiche 31 aufweisen. Auch eine andere Anzahl von Pinelement 32 ist vorstellbar. Die Kontaktbereiche 31 können, wie in der Figur 1 dargestellt, Stecker bilden. Es ist jedoch auch denkbar, stattdessen eine Buchse vorzusehen. In gestrichelter Darstellung sind Bereiche der Verbindungselemente 30 dargestellt, die in dem Rahmenteil 23 aufgenommen sind.

Die Kontaktbereiche 31 der Verbindungselemente 30 können aus dem Rahmenteil 23 hervorragen. Vorliegend sind zwei Verbindungselemente 30 in einer Längsstrebe 23.1 des Rahmens 21 vorgesehen. Es ist jedoch auch denkbar, eine andere Anzahl von Verbindungselementen 30 vorzusehen. Auch ist es vorstellbar, eine abweichende Anordnung, insbesondere in und/oder an mehreren Längs- und/oder Querstreben 23.1, 23.2 vorzusehen.

Ferner kann an dem Modulträger 20 ein Hauptanschluss-Terminal 40 vorgesehen sein. Das Hauptanschluss-Terminal 40 kann eine Aufnahmebuchse 42 aufweisen, die zum Anschluss einer Anschluss-Leitung 43 dienen kann. Beispielsweise können Anschlussadern 44 der Anschluss-Leitung 43 in Steckaufnahmen 41 der Aufnahmebuchse 42 aufgenommen und mittels Klemmschrauben 45 in diesen festgelegt werden, wie dies deutlicher aus Figur 2 hervorgeht. Anstelle einer Aufnahmebuchse 42 ist natürlich auch ein Stecker denkbar, wobei in diesem Fall die Anschluss-Leitung 43 mit einer entsprechenden Buchse versehen sein kann.

Die Anschluss-Leitung 43 kann beispielsweise einen Kontakt zu einer Stromverbindung, insbesondere einem Netzgerät, und zu einer oder mehreren Hausstellen, wie beispielsweise Sprechstellen oder Wohntelefonen, insbesondere mittels einer Bus-Verbindung herstellen.

Das Hauptanschluss-Terminal 40 kann ferner ein Hauptanschluss-Element 47 zur Verbindung mit einem Modul-Hauptanschlusselement 13 des Moduls 10 aufweisen. Vorliegend ist das Hauptanschluss-Element 47 als Buchse mit Steckaufnahmen 46 ausgestaltet. In Steckaufnahmen 46 können Modul-Kontaktpins 14 des Modul-Hauptanschlusselements 13 aufnehmbar sein. Denkbar ist selbstverständlich auch, dass das Hauptanschluss-Element 47 als Stecker ausgebildet ist und das Modul-Hauptanschlusselement 13 entsprechend als Buchse.

Das Hauptanschluss-Terminal 40 kann an dem Modulträger 20 angebracht sein. Vorliegend ist das Hauptanschluss-Terminal 40 an einer Längsstrebe 23.1 zwischen den Verbindungselement 30 vorgesehen. Es ist jedoch auch denkbar, das Hauptanschluss-Terminal 40 in einem anderen Bereich vorzusehen. Das Hauptanschluss-Terminal 40 kann an dem Modulträger 20 kraft- und/oder formschlüssig angebracht sein. Besonders bevorzugt ist eine Rastverbindung, wobei auch stoffschlüssige Verbindungsarten, insbesondere eine Klebung, denkbar sind.

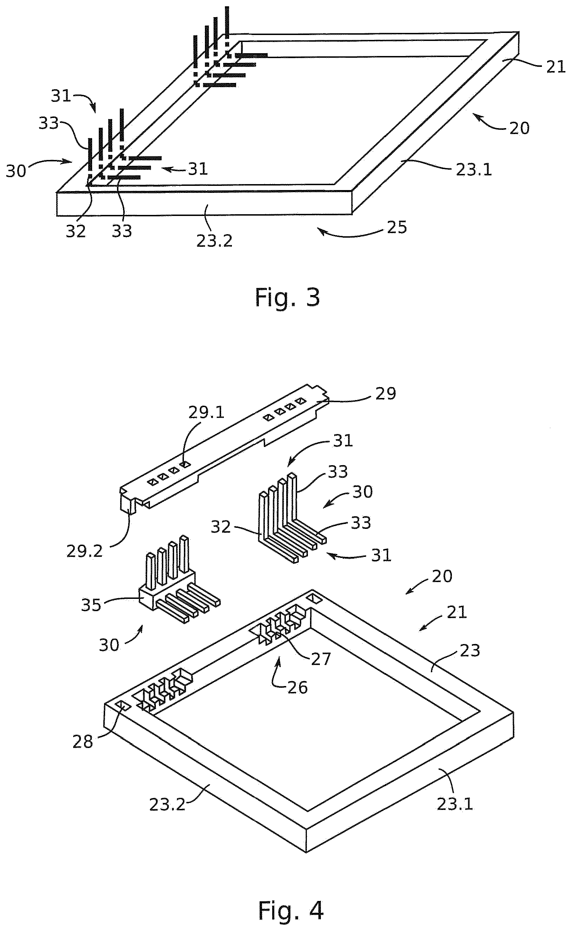

Es muss nicht zwingend vorgesehen sein, dass der Modulträger 20, insbesondere nicht jeder Modulträger 20, ein Hauptanschluss-Terminal 40 trägt. Die Figur 3 zeigt beispielsweise eine Ausführung eines Modulträgers 20 ohne Hauptanschluss-Terminal 40.

In Figur 2 ist eine schematische Darstellung eines Modulträgers 20 mit teilweise angeschlossenen Verbindungsleitungen 50 und angeschlossener Anschluss-Leitung 43 zu sehen. Einige Rahmenteile 23 sind für eine bessere Übersicht nur in gestrichelten Linien angedeutet. Die Verbindungsleitungen 50 können beispielsweise Bus-Leitungen sein, mit denen eine Verbindung mit einem weiteren Modulträger 20 und/oder einem Modul 10 herstellbar sind.

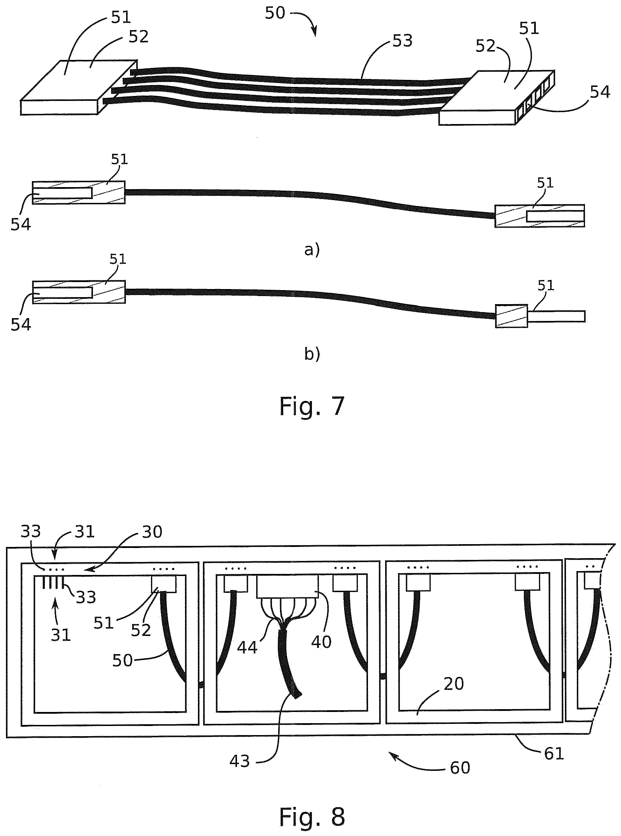

Wie der Figur 7 deutlicher zu entnehmen ist, kann die Verbindungsleitung 50 zwei Verbindunganschlüsse 51 aufweisen. Die Verbindunganschlüsse 51 können als Buchsen ausgeführt sein und Steckaufnahmen 54 aufweisen, wie dies insbesondere in Figur 7a zu sehen ist. Die Steckaufnahmen 54 können dazu ausgebildet sein, die Kontaktpins 33 der Kontaktbereiche 31 der Verbindungselemente 30 aufzunehmen. Selbstverständlich ist auch denkbar, dass die Verbindunganschlüsse 51 als Stecker ausgeführt sind. Auch ist vorstellbar, dass eine Verbindungsleitung 50 sowohl als Stecker als auch als Buchse ausgebildete Verbindungsanschlüsse 51 aufweist, wie dies insbesondere in Figur 7b dargestellt ist. Auf diese Weise kann beispielsweise eine Verbindungsleitung 50 durch das Anschließen einer oder mehrerer weiterer Verbindungsleitungen 50 verlängert werden. Die Verbindungsleitungen 50 können aufeinander steckbar sein. Die Verbindungsleitung 50 kann als mehradrige Leitung mit Verbindungsadern 53 ausgeführt sein.

Vorteilhaft können die Verbindungsleitung 50 und insbesondere die Verbindunganschlüsse 51 flach ausgeführt sein. Somit kann eine Verbindungsleitung 50 auf einfache Weise beispielsweise zwischen einem Rahmen 21 und/oder einem Haltesteg 63 eines Aufnahmegehäuses 60 durchgeführt werden, wie dies in der Figur 10 mit einem Pfeil verdeutlicht ist. Mit anderen Worten ist es vorzugsweise so, dass die Höhe der Verbindungsanschlüsse 51 kleiner ist als der Abstand zwischen der Rückwand 62 und der zugekehrten Seite des Rahmens 21 und/oder des Haltestegs 63

Wie in Figur 4 zu sehen ist, kann der Modulträger 20, vorzugsweise an oder in einem Rahmenteil 23, eine oder mehrere Verbindungselement-Aufnahmen 26 aufweisen. Die Verbindungselement-Aufnahmen 26 können beispielsweise in einer Längsstrebe 23.1 vorgesehen sein. Eine Verbindungselement-Aufnahme 26 kann mehrere Pinelement-Aufnahmen 27 aufweisen, die dazu ausgebildet sein können, Pinelemente 32 eines Verbindungselements 30 zumindest teilweise aufzunehmen. Dazu können die Pinelement-Aufnahmen 27 im Wesentlichen komplementär zu Bereichen der Pinelemente 32 ausgebildet sein. Die Verbindungselement-Aufnahmen 26 können bei der Herstellung des Modulträgers 20 bereits eingeformt sein. Es ist jedoch auch denkbar, diese beispielsweise spanend aus dem Modulträger 20 auszuformen.

In die Verbindungselement-Aufnahmen 26 können Verbindungselemente 30 einsetzbar sein. Hierbei können die Verbindungselemente 30 beispielsweise aus mehreren Pinelementen 32 bestehen, die mittels eines Halteelements 35, vorzugsweise beabstandet, aneinander gehalten sind, wie dies in der Figur 4 anhand des links abgebildeten Verbindungselements 30 zu erkennen ist. Wie der Figur 4 weiter entnommen werden kann, können die Pinelemente 32 aber auch einzeln vorgesehen sein, insbesondere ohne, dass sie durch ein Halteelement 35 aneinander gehalten sind, wie dies anhand des rechten Verbindungselements 30 ersichtlich ist.

Ferner kann eine Aufnahme-Abdeckung 29 vorgesehen sein. Die Aufnahme-Abdeckung 29 kann dazu dienen, eine oder mehrere Verbindungselement-Aufnahmen 26 zumindest teilweise abzudecken. Die Aufnahme-Abdeckung 29 kann ferner dazu dienen, ein in die Verbindungselement-Aufnahme 26 eingesetztes Verbindungselement 30 zu halten. Die Aufnahme-Abdeckung 29 kann beispielsweise Durchbrüche 29.1 aufweisen, durch die Pinelemente 32, insbesondere mit ihren Kontaktpins 33, hindurchgeführt sein können. Wie der Figur 4 zu entnehmen ist, kann die Aufnahme-Abdeckung 29 an dem Rahmenteil 23 lösbar anbringbar sein. Beispielsweise können an der Aufnahme-Abdeckung 29 Rastelemente 29.2 vorgesehen sein, die mit Rastaufnahmen 28 des Rahmens 21 in Eingriff zu bringen sind.

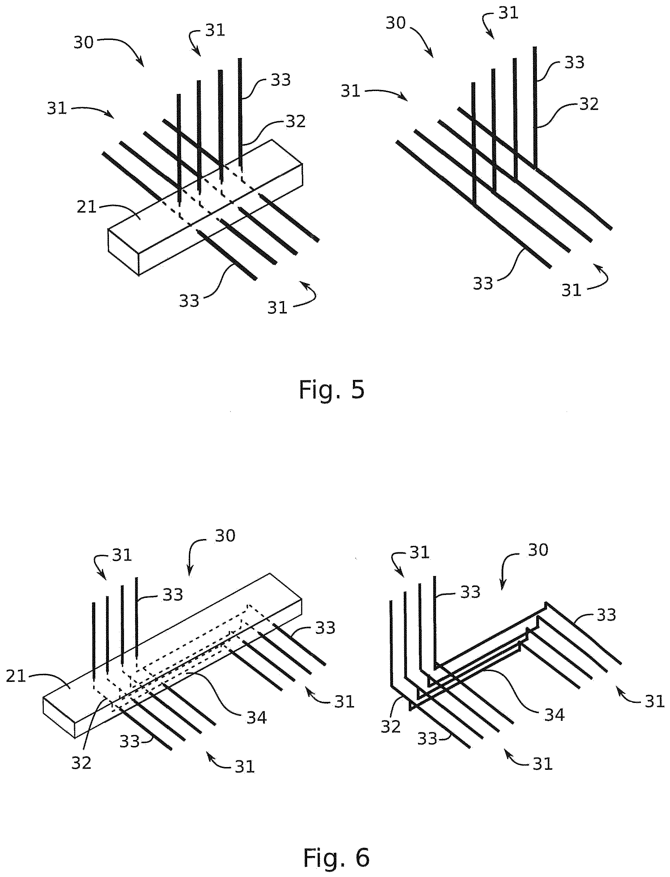

In Figur 5 ist eine weitere Ausführungsform eines Verbindungselements 30 dargestellt. Das Verbindungselement 30 kann zumindest teilweise in dem Rahmen 21 aufgenommen sein. Das Verbindungselement 30 kann drei Kontaktbereiche 31 aufweisen, wobei zwei Kontaktbereiche 31 in einem Winkel zueinander ausgerichtet sein können, der beispielsweise ein rechter Winkel sein kann. Ein Pinelement 32 kann dementsprechend drei Kontaktpins 33 aufweisen, wobei zwei Kontaktpins 33 in einem Winkel zueinander ausgerichtet sein können. Ein dritter Kontaktpin 33 kann kollinear mit einem der übrigen Kontaktpins 33 ausgerichtet sein. Die Pinelemente 32 können einteilig ausgebildet sein. Es ist jedoch auch denkbar, dass ein Pinelement 32 mit drei Kontaktpins 33 aus zwei Elementen, beispielsweise Drahtelementen, gebildet ist. Die Drahtelemente können in geeigneter Weise miteinander verbunden sein, beispielsweise stoffschlüssig, insbesondere durch eine Lötverbindung.

Figur 6 zeigt ein weiteres Ausführungsbeispiel eines Verbindungselements 30 mit drei Kontaktbereichen 31. Wie der Abbildung zu entnehmen ist, kann das Verbindungselement 30 drei Kontaktbereiche 31 aufweisen, wobei ein erster Kontaktbereich 31 mit einem zweiten Kontaktbereich 31 im Winkel steht, vorzugsweise im rechten Winkel. Ein dritter Kontaktbereich 31 kann mit einem ersten oder zweiten Kontaktbereich 31 parallel, vorzugsweise kollinear ausgerichtet sein, und von diesem beabstandet vorgesehen sein. Dabei können die Pinelemente 32 so ausgestaltet sein, dass die Kontaktpins 33 des dritten Kontaktbereichs 31 mit den Kontaktpins 33 des ersten und/oder zweiten Kontaktbereichs 31 mittels Pin-Leitungselementen 34 verbunden sind. Die Pin-Leitungselemente 34 können zumindest teilweise in dem Modulträger 20, insbesondere im Rahmen 21, aufgenommen, beispielsweise stoffschlüssig darin eingebettet, sein.

Die Figuren 8 und 9 zeigen beispielhaft Anordnungen von Modulträgern 20 in einem Aufnahmegehäuse 60 einer Türanlage in einer Aufsicht. Wie der Abbildung zu entnehmen ist, kann das Aufnahmegehäuse 60 mehrere Seitenwände 61 aufweisen. Die Modulträger 20 können in einem Rasterabstand aneinandergereiht sein, wobei ein Abstand zwischen den Modulträgern 20 vorgesehen sein kann. Ein Modulträger 20 kann, beispielsweise mittels eines Hauptanschluss-Terminals 40, an einer Anschluss-Leitung 43 angeschlossen sein. Die Modulträger 20 können untereinander mittels Verbindungsleitungen 50 verbunden sein, die mit ihrem Verbindunganschluss 51 an einen Kontaktbereich 31 eines an dem Modulträger 20 vorgesehenen Verbindungselements 30 angeschlossen sind. Vorzugsweise können die Verbindungsleitungen 50 unter den Modulträgern 20 hindurchführbar sein.

Figur 8 zeigt hierbei in teilweise abgebrochener Ansicht einen Teilbereich eines Aufnahmegehäuses 60, das für eine einreihige Anordnung von Moduleinheiten 1 ausgebildet ist, wobei eine Moduleinheit 1 aus einem Modulträger 20 und einem Modul 10 ausgebildet sein kann. In Figur 9 ist eine zweireihige Anordnung dargestellt. Es sind selbstverständlich auch andere Ausgestaltungen von Aufnahmegehäusen 60 und/oder Anordnungen von Modulträgern 20 und/oder Moduleinheiten 1 denkbar.

In Figur 10 ist eine Schnittansicht eines Aufnahmegehäuses 60 mit darin aufgenommenen Moduleinheiten 1 dargestellt. Hier sind zwei Moduleinheiten 1 in der Schnittansicht sichtbar. Es kann sich dementsprechend beispielsweise um eine Anordnung gemäß Figur 9 handeln. Das Aufnahmegehäuse 60 kann Seitenwände 61 und eine Rückwand 62 aufweisen. An den Seitenwänden 61 und/oder der Rückwand 62 können Haltestege 63 vorgesehen sein, an denen sich Modulträger 20 beispielsweise mit ihrem Rahmen 21 abstützen können. Die Modulträger 20 können die Module 10 in geeigneter Weise aufnehmen, wie dies bereits zu Figur 1 beschrieben wurde, jedoch in Figur 10 nicht näher dargestellt ist.

Zur Montage können die Modulträger 20 in dem Aufnahmegehäuse 60 angeordnet werden, beispielsweise mit ihren Rahmen 21 an den Haltestegen 63 zur Anlage gebracht werden. Es ist denkbar, eine geeignete Verrastung oder andersartige, vorzugsweise lösbare, Festlegung der Modulträger an dem Aufnahmegehäuse 60 vorzusehen. An einem Modulträger 20 kann ein Hauptanschluss-Terminal 40 vorgesehen sein. Somit kann eine Anschluss-Leitung 43 mit ihren Anschlussadern 44 in den Steckaufnahmen 41 des Hauptanschluss-Terminals 40 eingesetzt und mittels Klemmschrauben 45 festgelegt werden.

Ferner kann eine Verbindungsleitung 50 mit ihrer Verbindungsbuchse 52 mit einem Kontaktbereich 31 eines Verbindungselements 30 verbunden werden, beispielsweise durch Aufnahme von Kontaktpins 33 des Verbindungselements 30 in Steckaufnahmen 54 der Verbindungsleitung 50. Die Verbindungsleitung 50 kann dann zu einem weiteren Modulträger 20, insbesondere zur Verbindung einer weiteren Moduleinheit 1 geführt werden.

Wie der Figur 10 zu entnehmen ist, kann die Verbindungsleitung 50, insbesondere eine Verbindungsbuchse 52 der Verbindungsleitung 50, vorzugsweise flach ausgeführt sein, damit eine Durchführung zwischen einem Modulträger 20 oder einem Haltesteg 63 und der Rückwand 62 einfach auszuführen ist.

Schließlich kann auf den Modulträger 20 ein Modul 10 aufgesetzt werden. Dabei kann eine Verbindung des Moduls 10 mit dem Verbindungselement 30 durch eine Aufnahme von Kontaktpins 33 des Verbindungselements 30 in Modul-Kontaktaufnahmen 17 eines Modul-Kontaktbereichs 16 eines Modul-Verbindungselements 15 erfolgen.

Eine Verbindung des Moduls 10 mit dem Hauptanschluss-Terminal 40 kann mittels einer Aufnahme von Modul-Kontaktpins 14 des Modul-Hauptanschlusselements 13 des Moduls 10 in Steckaufnahmen 46 des Hauptanschluss-Elements 47 des Hauptanschluss-Terminals 40 erfolgen.

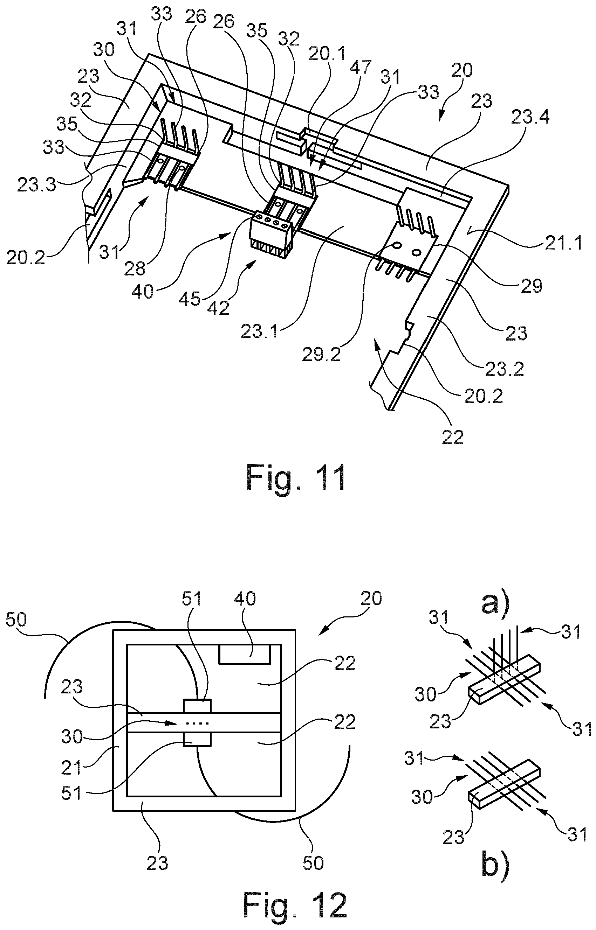

In Figur 11 ist in einer teilweise abgebrochenen schematischen Darstellung ein weiteres Ausführungsbeispiel eines Modulträgers 20 gezeigt. Wie bereits zuvor erwähnt, können die Rahmenteile 23 voneinander abweichende Querschnitte aufweisen. Wie in Figur 11 dargestellt, kann sich beispielsweise eine Längsstrebe 23.1 im Bereich der Modulträger-Unterseite 25 teilweise derart in Richtung des Aufnahmeraums 22 erstrecken, dass ein vergrößerter Bereich zur Aufnahme von Verbindungselementen 30 und/oder einem Hauptanschluss-Terminal 40 bereitgestellt wird. Die Längsstrebe 23.1 kann Verbindungselement-Aufnahmen 26 aufweisen, in die Verbindungselemente 30 zumindest teilweise einsetzbar sind. An den Verbindungselement-Aufnahmen 26 können Rastelemente vorgesehen sein, um die Verbindungselemente 30 und/oder Aufnahme-Abdeckungen 29 verrasten zu können. Wie in der Figur 11 zu sehen, können als Rastelemente Rastaufnahmen 28 an den Verbindungselement-Aufnahmen 26 vorgesehen sein. Mittels Aufnahme-Abdeckungen 29, die korrespondierend ausgebildete Rastelemente 29.2 aufweisen können, können die Verbindungselemente 30 an der Längsstrebe 23.1 gehalten sein. Selbstverständlich ist es auch denkbar, die Verbindungselemente 30, die Verbindungselement-Aufnahmen 26 und die Rastaufnahme 28 an einer Querstrebe 23.2 vorzusehen.

Weiter ist der Figur 11 zu entnehmen, dass das Hauptanschluss-Terminal 40 als Hauptanschluss-Element 47 ein Verbindungselement 30 aufweisen kann. Abweichend von dem in den Figuren 1, 2 und 10 dargestellten Hauptanschluss-Terminal 40 weist das Hauptanschluss-Terminal 40 somit ein Hauptanschluss- Element 47 auf, das durch einen Kontaktbereich 31 in Form eines Steckers gebildet ist. Ein weiterer Kontaktbereich des dem Hauptanschluss-Terminal 40 zugeordneten Verbindungselements 30 kann elektrisch mit der Aufnahmebuchse 42 verbunden sein. Auf diese Weise kann das Hauptanschluss-Terminal 40 mit dem zugeordneten Verbindungselement 30 auf die gleiche Weise mit einem Rahmenteil 23, vorliegend mit der Längsstrebe 23.1 verbunden werden, wie dies zuvor beschrieben wurde. Insbesondere kann auch für das Verbindungselement 30 des Hauptanschluss-Terminals 40 eine Verbindungselement-Aufnahme 26 vorgesehen sein. Diese kann ebenfalls mit einer Aufnahme-Abdeckung 29, vorzugsweise rastbar, zu verdecken sein.

Der Modulträger 20 kann an seinen Rahmenteilen 23 Befestigungsmittel 20.1, 20.2 aufweisen, die der Befestigung des Moduls 10 an dem Modulträger 20 und/oder der Befestigung des Modulträgers 20 an einem Aufnahmegehäuse 60 dienen können. Beispielsweise kann eine lösbare Befestigung vorgesehen sein, insbesondere ist eine Rastverbindung vorstellbar.

Aus Figur 12 geht hervor, dass ein Modulträger 20 auch zur Aufnahme von mehreren Modulen 10 ausgebildet sein kann. Vorzugsweise können zwei Module 10 an einem Modulträger 20 aufnehmbar sein. Der Modulträger 20 kann dann zwei oder mehrere Aufnahmeräume 22 aufweisen, die durch ein oder mehrere Rahmenteile 23 zumindest teilweise voneinander getrennt sein können. Wie in der Figur 12 dargestellt, können diese Rahmenteile 23 Verbindungselemente 30 aufweisen. Vorzugsweise kann an diesem Rahmenteil 23 ein Verbindungselement 30 gemäß Figur 5 vorgesehen sein, wie dies ferner in Figur 12a dargestellt ist. Auch ist es denkbar, ein Verbindungselement 30 vorzusehen, das zwei Kontaktbereiche 31 aufweist, die im Wesentlichen parallel und entgegengesetzt zueinander und vorzugsweise parallel zu der Modulträger-Unterseite 25 verlaufen, wie dies in der Figur 12b illustriert ist.

Selbstverständlich können auch an den übrigen Rahmenteilen 23 Verbindungselemente 30 vorgesehen sein. Im Bereich eines der Aufnahmeräume 22 kann ein Hauptanschluss-Terminal 40 vorgesehen sein.

Mittels der Verbindungselemente 30 und Verbindungsleitungen 50 können somit mehrere Modulträger 20 und/oder Modul 10 miteinander in einer Weise verbunden werden, wie dies zuvor beschrieben wurde.

## Patentansprüche

1. Modulträger (20) zur Aufnahme eines Moduls (10) für Türanlagen,
insbesondere für Türsprechanlagen,
wobei der Modulträger (20) zur Anordnung,
insbesondere zur rastermäßigen Anordnung in oder an einem Aufnahmegehäuse (60) ausgebildet ist,
wobei der Modulträger (20) einen Rahmen (21) aufweist, der Rahmenteile (23) in Form von Längs- und Querstreben (23.1, 23.2) aufweist und einen Aufnahmeraum (22) zur Aufnahme des Moduls zumindest teilweise umgibt,
**dadurch gekennzeichnet,**
**dass** wenigstens eines der Rahmenteile (23) des Modulträgers (20) mindestens ein Verbindungselement (30)
mit mindestens zwei Kontaktbereichen (31)
zur mittelbaren oder unmittelbaren elektrischen Verbindung mit mindestens einem weiteren Modulträger (20)
und/oder mindestens einem Modul (10) aufweist.

2. Modulträger (20) nach Anspruch 1, **dadurch gekennzeichnet,**
**dass** das mindestens eine Verbindungselement (30) an dem Modulträger (20) unmittelbar gehalten ist.

3. Modulträger (20) nach Anspruch 1 oder 2, **dadurch gekennzeichnet,**
**dass** das wenigstens eine Rahmenteil (23) einen Rahmenteil-Querschnitt aufweist, und dass die Koppelstelle zwischen dem Verbindungselement (30) und dem Rahmenteil (23) zumindest bereichsweise,
vorzugsweise vollständig innerhalb des Rahmenteil-Querschnitts angeordnet ist.

4. Modulträger (20) nach einem der Ansprüche 1 bis 3, **dadurch gekennzeichnet,**
**dass** der Modulträger (20) aus einem Material besteht, und dass in einem Montagezustand das mindestens eine Verbindungselement (30) zumindest teilweise von diesem Material umgeben ist,
insbesondere unmittelbar mit diesem in Kontakt steht.

5. Modulträger (20) nach einem der Ansprüche 1 bis 4, **dadurch gekennzeichnet,**
**dass** das mindestens eine Verbindungselement (30) stoffschlüssig mit dem Modulträger (20) verbunden ist,
insbesondere, dass das mindestens eine Verbindungselement (30) während des Herstellungsprozesses des Modulträgers (20) mit diesem verbunden wird,
wobei der Herstellungsprozess des Modulträgers (20) vorzugsweise zumindest teilweise urformend ist,
wobei insbesondere das mindestens eine Verbindungselement (30) während des Herstellungsprozesses des Modulträger (20) von einem Grundmaterial des Modulträgers (20) eingegossen wird.

6. Modulträger (20) nach einem der Ansprüche 1 bis 4, **dadurch gekennzeichnet,**
**dass** das mindestens eine Verbindungselement (30) lösbar mit dem Modulträger (20) verbunden ist,
insbesondere mittels einer kraft- und/oder formschlüssigen Verbindung, besonders bevorzugt mittels einer Rastverbindung.

7. Modulträger (20) nach Anspruch 6, **dadurch gekennzeichnet,**
**dass** der Modulträger (20) zumindest eine Verbindungselement-Aufnahme (26) aufweist,
**dass** in der zumindest einen Verbindungselement-Aufnahme (26) zumindest ein Verbindungselement (30) aufnehmbar ist,
insbesondere, dass das zumindest eine Verbindungselement (30) in der zumindest einen Verbindungselement-Aufnahme (26) von zumindest einer Aufnahme-Abdeckung (29) gehalten ist,
wobei die Aufnahme-Abdeckung (29) vorzugsweise mittels einer Rastverbindung an dem Modulträger (20) festlegbar ist.

8. Modulträger (20) nach einem der Ansprüche 1 bis 7, **dadurch gekennzeichnet,**
**dass** zumindest ein Kontaktbereich (31) des zumindest einen Verbindungselements (30) in einem Montagezustand in Richtung zu dem Modul (10) orientiert ist,
und **dass** zumindest ein weiterer Kontaktbereich (31) des zumindest einen Verbindungselements (30) in einer Richtung von dem Rahmen (21) zu dem Aufnahmeraum (22) hin orientiert ist,
und/oder dass der zumindest eine weitere Kontaktbereich (31) in einer Richtung ausgehend von dem Rahmen (21) von dem Aufnahmeraum (22) hinweg orientiert ist.

9. Modulträger (20) nach einem der Ansprüche 1 bis 8, **dadurch gekennzeichnet,**
**dass** das zumindest eine Verbindungselement (30) aus einer Mehrzahl von Pinelementen (32) besteht,
wobei die Pinelemente (32) jeweils Kontaktpins (33) aufweisen,
und wobei die Kontaktbereiche (31) des Verbindungselements (30) in Form von Steckern aus den Kontaktpins (33) der Pinelemente (32) gebildet sind.

10. Modulträger (20) nach Anspruch 9, **dadurch gekennzeichnet,**
**dass** die Pinelemente (32) jeweils mindestens zwei Kontaktpins (33) aufweisen, die im Winkel zueinander stehen,
vorzugsweise senkrecht zueinander stehen.

11. Modulträger (20) nach Anspruch 8 oder 9, **dadurch gekennzeichnet,**
**dass** das zumindest eine Verbindungselement (30) drei Kontaktbereiche (31) aufweist,
wobei ein erster Kontaktbereich (31) durch eine Mehrzahl von ersten Kontaktpins (33) gebildet ist,
wobei ein zweiter Kontaktbereich (31) durch eine Mehrzahl von zweiten Kontaktpins (33) gebildet ist,
wobei die ersten zu den zweiten Kontaktpins (33) im Winkel stehen,
wobei ein dritter Kontaktbereich (31) durch eine Mehrzahl von dritten Kontaktpins (33) gebildet ist,
wobei die dritten Kontaktpins (33) zu den ersten oder den zweiten Kontaktpins (33) beabstandet
und parallel ausgerichtet sind,
und wobei die dritten Kontaktpins (33) vorzugsweise mit den ersten und/oder den zweiten Kontaktpins (33) mittels Pin-Leitungselementen (34) verbunden sind.

12. Modulträger (20) nach einem der Ansprüche 9 bis 11, **dadurch gekennzeichnet, dass** die dritten Kontaktpins (33) mit den ersten oder den zweiten Kontaktpins (33) kollinear ausgerichtet sind.

13. Modulträger (20) nach einem der Ansprüche 1 bis 12, **dadurch gekennzeichnet,**
**dass** an dem Modulträger (20) ein Haupt-Anschlussterminal (40) angebracht ist, wobei das Haupt-Anschlussterminal (40) dazu ausgebildet ist, eine elektrische Verbindung zwischen einer Anschluss-Leitung (43) und einem Modul (10) herzustellen,
wobei die Anbringung des Haupt-Anschlussterminal (40) an dem Modulträger (20) vorzugsweise mittels einer kraft-
und/oder formschlüssigen Verbindung,
insbesondere einer Rastverbindung,
einer Schraubverbindung,
einer Klemmverbindung oder
mittels einer stoffschlüssigen,
vorzugsweise einer Klebverbindung, erzielbar ist.

14. Modulträger (20) nach einem der Ansprüche 1 bis 13, **dadurch gekennzeichnet, dass** der Modulträger (20) keine Leiterplatte aufweist.

15. Moduleinheit (1)
mit einem Modulträger (20) nach einem der Ansprüche 1 bis 14 und einem Modul (10),
wobei das Modul (10) mindestens ein zu einem Kontaktbereich (31) des mindestens einen Verbindungselements (30) korrespondierend ausgebildetes Modul-Verbindungselement (15) aufweist,
vorzugsweise an einer Modul-Platine (12) des Moduls (10),
und wobei mittels des zumindest einen Modul-Verbindungselements (15) und des zumindest einen Kontaktbereichs (31) eine elektrische Verbindung zwischen dem Modulträger (20) und dem Modul (10) herstellbar ist.

16. Moduleinheit (1) nach Anspruch 15, **dadurch gekennzeichnet,**
**dass** das Modul (10) ein Modul-Hauptanschlusselement (13),
vorzugsweise an der Modul-Platine (12) des Moduls (10), aufweist,
und **dass** das Modul-Hauptanschlusselement (13) korrespondierend zu einem Hauptanschluss-Element (47) des Hauptanschluss-Terminals (40) ausgebildet ist.

17. Türanlage, insbesondere Türsprechanlage,
mit einem Aufnahmegehäuse (60) zur Aufnahme einer Anordnung, insbesondere gerasterten Anordnung, einer Mehrzahl von Moduleinheiten (1) nach Anspruch 15 oder 16,
**dadurch gekennzeichnet,**
**dass** eine Moduleinheit (1) als Hauptmoduleinheit mittels eines Hauptanschluss-Terminals (40) mit einer Anschluss-Leitung (43) verbindbar ist,
**dass** zwischen einem Kontaktbereich (31) der Hauptmoduleinheit und einem Kontaktbereich (31) mindestens einer weiteren Moduleinheit (1) mittels einer Verbindungsleitung (50) eine elektrische Verbindung herstellbar ist,
und **dass** vorzugsweise zwischen einem Kontaktbereich (31) der Hauptmoduleinheit und/oder einem Kontaktbereich (31) der mindestens einen weiteren Moduleinheit (1) mittels weiterer Verbindungsleitungen (50) eine elektrische Verbindung zu mindestens einer weiteren Moduleinheit (1) herstellbar ist.

## Claims

1. Module carrier (20) for receiving a module (10) for door systems,
in particular for door intercom systems,
the module carrier (20) being adapted for arrangement,
in particular for arrangement in a grid-like manner in or on a receiving housing (60),
the module carrier (20) having a frame (21) which has frame parts (23) in the form of longitudinal and transverse struts (23.1, 23. 2)
and at least partially surrounds a receiving space (22) for receiving the module, **characterized**
**in that** at least one of the frame parts (23) of the module carrier (20) has at least one connecting element (30)
with at least two contact areas (31)
for indirect or direct electrical connection to at least one further module carrier (20)
and/or at least one module (10).

2. Module carrier (20) according to claim 1, **characterized**
**in that** the at least one connecting element (30) is held directly on the module carrier (20).

3. Module carrier (20) according to claim 1 or 2, **characterized**
**in that** the at least one frame part (23) has a frame part cross-section, and in that the coupling point between the connecting element (30) and the frame part (23) is arranged at least partially,
preferably completely, within the frame part cross-section.

4. Module carrier (20) according to one of claims 1 to 3, **characterized**
**in that** the module carrier (20) consists of a material, and in that in an assembly state the at least one connecting element (30) is at least partially surrounded by this material,
in particular is in direct contact with it.

5. Module carrier (20) according to one of claims 1 to 4, **characterized**
**in that** the at least one connecting element (30) is connected to the module carrier (20) in a material bond,
in particular in that the at least one connecting element (30) is connected to the module carrier (20) during the manufacturing process of the module carrier (20), wherein the manufacturing process of the module carrier (20) is preferably at least partially a moulding process,
in particular wherein the at least one connecting element (30) is moulded into a base material of the module carrier (20) during the manufacturing process of the module carrier (20).

6. Module carrier (20) according to one of claims 1 to 4, **characterized**
**in that** the at least one connecting element (30) is releasably connected to the module carrier (20),
in particular by means of a force-fit and/or positive locking connection, particularly preferably by means of a snap-fit connection.

7. Module carrier (20) according to claim 6, **characterized**
**in that** the module carrier (20) has at least one connecting element receptacle (26),
**in that** at least one connecting element (30) can be accommodated in the at least one connecting element receptacle (26),
in particular in that the at least one connecting element (30) is held in the at least one connecting element receptacle (26) by at least one receptacle cover (29), the receptacle cover (29) being fixable to the module carrier (20) preferably by means of a snap-fit connection.

8. Module carrier (20) according to one of claims 1 to 7, **characterized**
**in that** at least one contact area (31) of the at least one connecting element (30) is oriented in a direction towards the module (10) in an assembly state,
and **in that** at least one further contact area (31) of the at least one connecting element (30) is oriented in a direction from the frame (21) towards the receiving space (22),
and/or in that the at least one further contact area (31) is oriented in a direction away from the receiving space (22), starting from the frame (21).

9. Module carrier (20) according to one of claims 1 to 8, **characterized**
**in that** the at least one connecting element (30) comprises a plurality of pin elements (32),
wherein the pin elements (32) each have contact pins (33),
and wherein the contact areas (31) of the connecting element (30) are formed in the form of plugs from the contact pins (33) of the pin elements (32).

10. Module carrier (20) according to claim 9, **characterized**
**in that** the pin elements (32) each have at least two contact pins (33) which are at an angle to one another,
preferably perpendicular to one another.

11. Module carrier (20) according to claim 8 or 9, **characterized**
**in that** the at least one connecting element (30) has three contact areas (31),
wherein a first contact area (31) is formed by a plurality of first contact pins (33), wherein a second contact area (31) is formed by a plurality of second contact pins (33),
wherein the first contact pins are at an angle to the second contact pins (33),
wherein a third contact area (31) is formed by a plurality of third contact pins (33), wherein the third contact pins (33) are spaced apart
and aligned parallel to the first or the second contact pins (33),
and wherein the third contact pins (33) are preferably connected to the first and/or the second contact pins (33) by means of pin conductor elements (34).

12. Module carrier (20) according to one of claims 9 to 11, **characterized in that** the third contact pins (33) are aligned collinearly with the first or the second contact pins (33).

13. Module carrier (20) according to any one of claims 1 to 12, **characterized**
**in that** a main connection terminal (40) is attached to the module carrier (20),
wherein the main connection terminal (40) is adapted to establish an electrical connection between a connection line (43) and a module (10),
wherein the attachment of the main connection terminal (40) to the module carrier (20) is preferably achievable by means of a positive locking and/or positive locking connection,
in particular a snap-fit connection,
a screw connection,
a clamp connection or
by means of a material bond,
preferably an adhesive bond.

14. Module carrier (20) according to one of claims 1 to 13, **characterized**
**in that** the module carrier (20) does not have a printed circuit board.

15. Module unit (1)
having a module carrier (20) according to one of claims 1 to 14 and a module (10),
the module (10) having at least one module connecting element (15) adapted to correspond to a contact area (31) of the at least one connecting element (30), preferably on a module circuit board (12) of the module (10),
and wherein an electrical connection can be established between the module carrier (20) and the module (10) by means of the at least one module connecting element (15) and the at least one contact area (31).

16. Module unit (1) according to claim 15, **characterized**
**in that** the module (10) has a module main connection element (13), preferably on the module circuit board (12) of the module (10),
and **in that** the module main connection element (13) is adapted to correspond to a main connecting element (47) of the main connection terminal (40).

17. Door system, in particular door intercom system,
having a receiving housing (60) for receiving an arrangement, in particular a gridded arrangement, of a plurality of module units (1) according to claim 15 or 16,
**characterized**
**in that** a module unit (1) can be connected as a main module unit to a connection line (43) by means of a main connection terminal (40),
**in that** an electrical connection can be established between a contact area (31) of the main module unit and a contact area (31) of at least one further module unit (1) by means of a connecting line (50),
and **in that** an electrical connection to at least one further module unit (1) can preferably be established between a contact area (31) of the main module unit and/or a contact area (31) of the at least one further module unit (1) by means of further connecting lines (50).

## Revendications

1. Support de module (20) destiné à recevoir un module (10) pour des installations de porte,
en particulier pour des interphones,
le support de module (20) étant conçu pour être disposé,
en particulier pour être disposé selon une trame dans ou sur un boîtier de réception (60),
le support de module (20) présentant un cadre (21) qui comporte des éléments de cadre (23) sous forme d'entretoises longitudinales et transversales (23.1, 23. 2) et entoure au moins partiellement un espace de réception (22) destiné à recevoir le module,
**caractérisé**
**en ce qu'**au moins l'un des éléments de cadre (23) du support de module (20) présente au moins un élément de connexion (30)
avec au moins deux zones de contact (31)
pour la connexion électrique directe ou indirecte avec au moins un autre support de module (20)
et/ou au moins un module (10).

2. Support de module (20) selon la revendication 1, **caractérisé**
**en ce que** l'au moins un élément de connexion (30) est maintenu directement sur le support de module (20).

3. Support de module (20) selon la revendication 1 ou 2, **caractérisé**
**en ce que** l'au moins un élément de cadre (23) présente une section transversale d'élément de cadre, et en ce que le point de couplage entre l'élément de connexion (30) et l'élément de cadre (23) est disposé au moins par zones,
de préférence entièrement à l'intérieur de la section transversale d'élément de cadre.

4. Support de module (20) selon l'une des revendications 1 à 3, **caractérisé**
**en ce que** le support de module (20) est constitué d'un matériau, et en ce que, dans un état de montage, l'au moins un élément de connexion (30) est au moins partiellement entouré par ce matériau,
en particulier est directement en contact avec celui-ci.

5. Support de module (20) selon l'une des revendications 1 à 4, **caractérisé**
**en ce que** l'au moins un élément de connexion (30) est relié au support de module (20) par liaison de matière,
notamment en ce que l'au moins un élément de connexion (30) est relié au support de module (20) pendant le processus de fabrication de ce dernier,
le processus de fabrication du support de module (20) étant de préférence au moins partiellement de type moulage primaire,
l'au moins un élément de connexion (30) étant notamment coulé pendant le processus de fabrication du support de module (20) à partir d'un matériau de base du support de module (20).

6. Support de module (20) selon l'une des revendications 1 à **4, caractérisé**
**en ce que** l'au moins un élément de connexion (30) est relié de manière amovible au support de module (20),
notamment au moyen d'une liaison par adhérence et/ou par complémentarité de forme, de manière particulièrement préférée au moyen d'une liaison par encliquetage.

7. Support de module (20) selon la revendication 6, **caractérisé**
**en ce que** le support de module (20) présente au moins un logement d'élément de connexion (26),
**en ce qu'**au moins un élément de connexion (30) peut être reçu dans le au moins un logement d'élément de connexion (26),
en particulier en ce que le au moins un élément de connexion (30) est maintenu dans le au moins un logement d'élément de connexion (26) par au moins un couvercle de logement (29),
le couvercle de logement (29) pouvant être fixé sur le support de module (20) de préférence au moyen d'une liaison par encliquetage.

8. Support de module (20) selon l'une des revendications 1 à 7, **caractérisé**
**en ce qu'**au moins une zone de contact (31) de l'au moins un élément de connexion (30) est orientée en direction du module (10) dans un état de montage, et en ce qu'au moins une autre zone de contact (31) de l'au moins un élément de connexion (30) est orientée dans une direction allant du cadre (21) vers l'espace de réception (22),
et/ou en ce que l'au moins une autre zone de contact (31) est orientée dans une direction s'éloignant du cadre (21) de l'espace de réception (22).

9. Support de module (20) selon l'une quelconque des revendications 1 à 8, **caractérisé**
**en ce que** ledit au moins un élément de connexion (30) est constitué d'une pluralité d'éléments à broches (32),
lesdits éléments à broches (32) comportant chacun des broches de contact (33), et dans lequel les zones de contact (31) de l'élément de connexion (30) sous forme de fiches sont formées par les broches de contact (33) des éléments à broches (32).

10. Support de module (20) selon la revendication 9, **caractérisé**
**en ce que** les éléments à broches (32) comportent chacun au moins deux broches de contact (33) formant un angle entre elles,
de préférence perpendiculaires entre elles.

11. Support de module (20) selon la revendication 8 ou 9, **caractérisé**
**en ce que** ledit au moins un élément de connexion (30) comporte trois zones de contact (31),
une première zone de contact (31) étant formée par une pluralité de premières broches de contact (33),
une deuxième zone de contact (31) étant formée par une pluralité de deuxièmes broches de contact (33),
les premières broches de contact (33) étant inclinées par rapport aux deuxièmes broches de contact (33),
dans lequel une troisième zone de contact (31) est formée par une pluralité de troisièmes broches de contact (33),
les troisièmes broches de contact (33) étant espacées des premières ou des deuxièmes broches de contact (33)
et orientées parallèlement à celles-ci,
et dans lequel les troisièmes broches de contact (33) sont de préférence reliées aux premières et/ou aux deuxièmes broches de contact (33) au moyen d'éléments de connexion de broches (34).

12. Support de module (20) selon l'une des revendications 9 à 11, **caractérisé**
**en ce que** les troisièmes broches de contact (33) sont alignées de manière colinéaire avec les premières ou les deuxièmes broches de contact (33).

13. Support de module (20) selon l'une des revendications 1 à 12, **caractérisé**
**en ce qu'**un terminal de connexion principal (40) est monté sur le support de module (20),
le terminal de connexion principal (40) étant configuré pour établir une connexion électrique entre un câble de connexion (43) et un module (10),
la fixation du terminal de connexion principal (40) sur le support de module (20) pouvant être obtenue de préférence au moyen d'une liaison par force et/ou par forme,
en particulier une liaison par encliquetage,
une liaison par vis,
une liaison par serrage ou
au moyen d'une liaison par matière,
de préférence une liaison par collage.

14. Support de module (20) selon l'une des revendications 1 à 13, **caractérisé en ce que** le support de module (20) ne comporte pas de circuit imprimé.

15. Unité modulaire (1)
comprenant un support de module (20) selon l'une des revendications 1 à 14 et un module (10),
le module (10) présentant au moins un élément de connexion de module (15) configuré de manière à correspondre à une zone de contact (31) de l'au moins un élément de connexion (30),
de préférence sur une platine de module (12) du module (10),
et une connexion électrique pouvant être établie entre le support de module (20) et le module (10) au moyen de l'au moins un élément de connexion de module (15) et de l'au moins une zone de contact (31).

16. Unité modulaire (1) selon la revendication 15, **caractérisée**
**en ce que** le module (10) comporte un élément de connexion principal du module (13),
de préférence sur la platine de module (12) du module (10),
et **en ce que** l'élément de connexion principal du module (13) est réalisé en correspondance avec un élément de connexion principal (47) du terminal de connexion principal (40).

17. Installation de porte, notamment interphone,
comprenant un boîtier de réception (60) destiné à recevoir un agencement, notamment un agencement tramé, d'une pluralité d'unités modulaires (1) selon la revendication 15 ou 16,
**caractérisée**
**en ce qu'**une unité modulaire (1) peut être reliée à un câble de connexion (43) en tant qu'unité modulaire principale au moyen d'un terminal de connexion principal (40),
**en ce qu'**une liaison électrique peut être établie entre une zone de contact (31) de l'unité modulaire principale et une zone de contact (31) d'au moins une autre unité modulaire (1) au moyen d'une ligne de liaison (50),
et **en ce qu'**une liaison électrique peut être établie de préférence entre une zone de contact (31) de l'unité modulaire principale et/ou une zone de contact (31) de la au moins une autre unité modulaire (1) au moyen d'autres lignes de liaison (50) vers au moins une autre unité modulaire (1).
